# EUROPÄISCHE PATENTSCHRIFT

(11) **EP 2 237 968 B1**
(45) Veröffentlichungstag und Bekanntmachung des Hinweises auf die Patenterteilung: **12.02.2020**
(21) Anmeldenummer: 08867406.4
(22) Anmeldetag: 17.12.2008
(51) Int. Cl.: B42D 15/00, B41M 3/14

(54) **VERFAHREN ZUM ERZEUGEN EINER MIKROSTRUKTUR**
METHOD FOR PRODUCING A MICROSTRUCTURE
PROCÉDÉ DE RÉALISATION D'UNE MICROSTRUCTURE

(30) Priorität: 21.12.2007 DE 102007061980
(43) Veröffentlichungstag der Anmeldung: 13.10.2010
(73) Patentinhaber: Giesecke+Devrient Currency Technology GmbH, 81677 München (DE)
(72) Erfinder: LIEBLER, Ralf, 83727 Schliersee (DE); DICHTL, Marius, 81371 München (DE); HEIM, Manfred, 83646 Bad Tölz (DE)
(86) Internationale Anmeldenummer: PCT/EP2008/010741
(87) Internationale Veröffentlichungsnummer: WO 2009/083147

(56) Entgegenhaltungen:
- WO-A-92/00856
- WO-A-2007/133613
- WO-A2-2006/108611
- DE-A1-102005 062 132
- US-A- 5 393 099
- US-A1- 2004 206 920

## Beschreibung

Die Erfindung betrifft ein Verfahren zum Erzeugen einer Mikrostruktur, wie es insbesondere bei der Herstellung von Sicherheitselementen mit mikrooptischen Strukturen, insbesondere mikrooptischen Moire-Vergrößerungsanordnungen, zum Einsatz kommt.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements ausgebildet sein, das nach seiner Herstellung auf ein Wertdokument aufgebracht wird.

Eine besondere Rolle spielen dabei Sicherheitselemente mit optisch variablen Elementen, die dem Betrachter unter unterschiedlichen Betrachtungswinkeln einen unterschiedlichen Bildeindruck vermitteln, da diese selbst mit hochwertigen Farbkopiergeräten nicht reproduziert werden können. Die Sicherheitselemente können dazu mit Sicherheitsmerkmalen in Form beugungsoptisch wirksamer Mikro- oder Nanostrukturen ausgestattet werden, wie etwa mit konventionellen Prägehologrammen oder anderen hologrammähnlichen Beugungsstrukturen, wie sie beispielsweise in den Druckschriften EP 0 330 733 A1 oder EP 0 064 067 A1 beschrieben sind.

Seit einiger Zeit werden auch mikrooptische Strukturen, wie beispielsweise geblazte Gitterstrukturen, Mikrolinsenstrukturen, fresnellinsenartige Strukturen oder sogenannte Moire-Vergrößerungsanordnungen, als Sicherheitsmerkmale eingesetzt. Die prinzipielle Funktionsweise derartiger Moire-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt, bezeichnet Moire-Vergrößerung demnach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, wobei in diesem Fall jeder der Moirestreifen in Gestalt eines vergrößerten und gedrehten Bildes der wiederholten Elemente des Bildrasters erscheint.

Werden die Raster aus Bildobjekten mittels herkömmlicher Drucktechnik erzeugt, so lassen sich Bildobjekte mit Strichstärken bis herab zu etwa 7 µm herstellen, so dass die Größen der gedruckten Bildobjekte, beispielsweise von Buchstaben oder Symbolen, bis herab zu etwa 70 µm betragen können. Aufgrund des Zusammenhangs zwischen Bildobjektgröße und Durchmesser und Brennweite der Linsen des für die Betrachtung notwendigen Linsenrasters beträgt die Gesamtdicke derart gefertigter Moire-Vergrößerungsanordnungen mindestens 100 µm, liegt also oberhalb der Dicke der üblicherweise abzusichernden Wertdokumente oder Banknoten.

In der Druckschrift WO 92/00856 A1 ist eine Transferfolie mit einer ein Muster bildenden Schicht beschrieben, die ein umgekehrtes Reliefmuster bildende Vertiefungen aufweist, die mit einem Reliefmaterial lösbar gefüllt sind. Außerdem umfasst die Transferfolie eine Halteschicht, z. B. eine Zusammensetzung aus Ton, die die Vertiefungen der das Muster bildenden Schicht abdeckt, so dass sie an dem Reliefmaterial klebt. Die das Muster bildende Schicht ist dabei von der Halteschicht und dem Reliefmaterial entfernbar, um das das Reliefmuster bildende Reliefmaterial freizulegen.

Davon ausgehend liegt der Erfindung die Aufgabe zugrunde, die Nachteile des Standes der Technik zu vermeiden und insbesondere ein verbessertes, bei der Herstellung mikrooptischer Strukturen, insbesondere mikrooptischer Moire-Vergrößerungsanordnungen, einsetzbares Verfahren zum Erzeugen einer Mikrostruktur anzugeben. Die Gesamtdicke der Anordnung soll bei geeigneter Aufbringung der Mikrostrukturen so gering sein können, dass sie als Sicherheitselement beispielsweise in Wertdokumente oder Banknoten eingebracht werden kann. Alternativ oder zusätzlich soll das optische Erscheinungsbild der Anordnungen verbessert werden und ein kontrastreicher und eindrucksvoller visueller Eindruck erzeugt werden.

Diese Aufgabe wird durch das Verfahren mit den Merkmalen des Hauptanspruchs gelöst. Weiterbildungen der Erfindung sind Gegenstand der Unteransprüche.

Die Erfindung betrifft ein Verfahren zum Erzeugen einer farbigen oder farblosen Mikrostruktur, bei dem
a) eine Werkzeugform in Form einer bahnförmigen Kunststofffolie bereitgestellt wird, deren Oberfläche eine Anordnung von Erhebungen und Vertiefungen in Gestalt der gewünschten Mikrostruktur aufweist,
b) die Vertiefungen der bahnförmigen Kunststofffolie mit einem härtbaren farbigen oder farblosen ersten Lack befüllt werden,
c) die Oberfläche der bahnförmigen Kunststofffolie mit einer Schicht aus einem härtbaren zweiten Lack in Kontakt gebracht wird,
d) der in Kontakt mit dem zweiten Lack stehende erste Lack in den Vertiefungen der bahnförmigen Kunststofffolie zusammen mit der Schicht aus dem zweiten Lack gehärtet und dabei mit der Schicht aus zweitem Lack verbunden wird, und
e) die Oberfläche der bahnförmigen Kunststofffolie wieder von dem zweiten gehärteten Lack entfernt wird, so dass der mit dem zweiten Lack verbundene, gehärtete erste Lack aus den Vertiefungen der bahnförmigen Kunststofffolie gezogen wird.

Die Oberfläche der bahnförmigen Kunststofffolie kann die gewünschte Mikrostruktur positiv oder negativ darstellen, das heißt, die gewünschte Mikrostruktur, wie etwa eine Buchstaben- oder Symbolfolge, kann durch Vertiefungen in einer ansonsten erhabenen Oberfläche repräsentiert sein oder durch Erhebungen in einer ansonsten vertieften Oberfläche. Da beim Aufbringen auf die Schicht aus zweitem Lack nur aus den Vertiefungen ein farbiger bzw. farbloser erster Lack übertragen wird, führen die beiden Varianten zu einer positiven bzw. negativen Darstellung desselben Informationsgehalts.

Die Anordnung von Erhebungen und Vertiefungen kann in die Oberfläche der bahnförmigen Kunststofffolie eingeprägt sein. Bevorzugt umfasst die bahnförmige Kunststofffolie eine Trägerfolie, auf die eine oder mehrere Lackschichten aufgebracht sind, in die die Anordnung von Erhebungen und Vertiefungen eingeprägt ist. Die auf die Trägerfolie der bahnförmigen Kunststofffolie aufgebrachten Lackschichten können dabei mit Vorteil durch einen thermoplastisch verformbaren Prägelack oder einen strahlungshärtenden Prägelack gebildet sein. Für eine gute Verankerung der aufgebrachten Lackschichten ist die Trägerfolie der bahnförmigen Kunststofffolie vorzugsweise vorbehandelt.

Bevorzugt wird die bahnförmige Kunststofffolie, insbesondere in den Vertiefungen, vor dem Befüllen mit dem ersten Lack in Schritt b) zur Unterstützung der vollständigen Entleerung der Vertiefungen mit Trennmitteln versehen. Als Trennmittel eignet sich beispielsweise eine niederprozentige Lösung von Octylphosphonsäure in organischen Lösungsmitteln, wie z.B. Essigester.

Die Dicke der bahnförmigen Kunststofffolie richtet sich nach den Erfordernissen des Prägevorgangs. Bevorzugt liegt die Dicke der bahnförmigen Kunststofffolie zwischen etwa 23 µm und etwa 50 µm.

In einer vorteilhaften Verfahrensvariante werden die Vertiefungen der bahnförmigen Kunststofffolie in Schritt b) mit einem strahlungshärtenden Lack befüllt. Die Oberfläche der bahnförmigen Kunststofffolie wird dann in Schritt c) mit einer Schicht aus strahlungshärtendem zweitem Lack in Kontakt gebracht wird, und die Schicht aus zweitem Lack zusammen mit dem ersten Lack in den Vertiefungen der bahnförmigen Kunststofffolie in Schritt d) durch Beaufschlagung mit Strahlung, insbesondere mit UV-Strahlung gehärtet.

Der erste Lack in den Vertiefungen der bahnförmigen Kunststofffolie kann vor dem In-Kontakt-Bringen des Schritts c) vorgehärtet werden, um eine Durchmischung mit dem zweiten Lack zu vermeiden. Darüber hinaus kann die Vorhärtung des ersten Lacks auch vorteilhaft eingesetzt werden, um zu verhindern, dass es beim eventuell notwendigen Aufwickeln der bahnförmigen Kunststofffolie zu einem Übertrag des farbigen oder farblosen Lacks auf die Rückseite der bahnförmigen Kunststofffolie kommt. Zusätzlich zu oder anstelle der Vorhärtung kann der erste Lack vor dem In-Kontakt-Bringen des Schritts c) physikalisch getrocknet werden. Inbesondere können strahlungshärtende Lacke vorgehärtet, physikalisch trocknende Lacke, beispielsweise lösungsmittelbasierte Polymerlösungen, physikalisch getrocknet werden, um eine im Wesentlichen tackfreie Oberfläche zu erhalten. In Fällen, in denen strahlungshärtende Lacke Wasser oder Lösungsmittel enthalten, kann es zur Erzielung von Tackfreiheit ausreichen, diese lediglich physikalisch zu trocknen. Im Rahmen der vorliegenden Beschreibung bedeutet der Begriff "im Wesentlichen tackfrei" auch im Wesentlichen klebfrei im Sinne einer glatten, im Wesentlichen nicht klebrigen Oberfläche.

Die Schicht aus dem zweiten Lack wird in einer vorteilhaften Verfahrensvariante vor dem In-Kontakt-Bringen des Schritts c) auf einen Träger aufgebracht. Für eine gute Verankerung des zweiten Lacks kann der Träger vorbehandelt werden. Vorzugsweise erfolgt die Vorbehandlung des Trägers für die Schicht aus zweitem Lack durch eine Druckvorbehandlung.

Vorzugsweise wird die Schicht aus dem zweiten Lack auf einen Träger aufgebracht, der eine transparente Kunststofffolie oder eine Papierschicht umfasst. Da es beim In-Kontakt-Bringen der bahnförmigen Kunststofffolie mit dem Träger beziehungsweise der Schicht aus zweitem Lack nicht zu Belastungen wie etwa beim Prägen kommt, können sowohl der Träger als auch die Schicht aus zweitem Lack sehr dünn ausgebildet sein. Insbesondere kann der Träger eine Dicke zwischen etwa 5 µm und etwa 23 µm, vorzugsweise zwischen etwa 5 µm und etwa 12 µm aufweisen. Die Schicht aus zweitem Lack wird vorzugsweise mit einer Schichtstärke von weniger als etwa 5 µm, vorzugsweise von weniger als etwa 3 µm auf den Träger aufgebracht.

Zusätzlich zu oder anstelle des ersten Lacks in den Vertiefungen kann auch die Schicht aus zweitem Lack vor dem In-Kontakt-Bringen des Schritts c) physikalisch getrocknet und/oder vorgehärtet werden.

In Schritt b) wird zweckmäßig ein eventueller Überschuss an farbigem oder farblosem Lack entfernt, insbesondere mittels Rakel, Wischzylinder oder dergleichen.

Dabei ist anzumerken, dass auf das Entfernen eines eventuellen Überschusses an farbigem oder farblosem Lack verzichtet werden kann, wenn ein niedrigviskoser Lack eingesetzt wird, dessen Oberflächenspannung auf die Oberflächenenergie der Reliefstruktur abgestimmt ist. In der Praxis reichert sich der niedrigviskose Lack nach der vollflächigen Aufbringung im Wesentlichen ohne externe Verfahrensschritte quasi "automatisch" in den Vertiefungen der Mikrostruktur der bahnförmigen Kunststofffolie an. Durch die Auswahl eines geeigneten niedrigviskosen Lacks ist aufgrund der gegebenen topologischen Eigenschaften der Mikrostruktur und des Benetzungsverhaltens des Lacks auf der Mikrostruktur der bahnförmigen Kunststofffolie ein Entfernen überschüssigen Lacks nicht erforderlich. Weitere Einzelheiten zur Auswahl des niedrigviskosen Lacks können der deutschen Patentanmeldung mit der Nummer 10 2007 062 089.8 entnommen werden, deren Offenbarungsgehalt insoweit zum Gegenstand der vorliegenden Anmeldung gemacht wird.

Die Mikrostruktur der bahnförmigen Kunststofffolie wird bevorzugt durch Mikrostrukturelemente mit einer Strichstärke zwischen etwa 1 µm und etwa 10 µm und/oder mit einer Strukturtiefe zwischen etwa 1 µm und etwa 20 µm, vorzugsweise zwischen etwa 1 µm und etwa 10 µm gebildet. Dabei erlaubt das erfindungsgemäße Verfahren bei geringer Strichstärke die Übertragung von Lack hoher Schichtdicke, so dass sich insbesondere im Fall der Verwendung farbiger Lacke sehr kontrastreiche Mikrostrukturen erzeugen lassen.

Das erfindungsgemäße Verfahren kann mit besonderem Vorteil bei der Herstellung mikrooptischer Strukturen, insbesondere mikrooptischer Moire-Vergrößerungsanordnungen, eingesetzt werden. Es soll jedoch betont werden, dass die Erfindung nicht auf diese Anwendung beschränkt ist. Vielmehr können das beschriebene Verfahren und die als bahnförmige Kunststofffolie ausgestaltete Werkzeugform vorteilhaft auch bei der Herstellung anderer Sicherheitselemente genutzt werden, beispielsweise für die Erzeugung von Mikrotextdrucken auf Papier oder Folie.

Wird das oben beschriebene Verfahren zur Herstellung einer mikrooptischen Moire-Vergrößerungsanordnung eingesetzt, so wird als Mikrostruktur vorzugsweise ein Motivbild aus einer planaren periodischen oder zumindest lokal periodischen Anordnung einer Vielzahl von Mikromotivelementen aufgebracht. Die lateralen Abmessungen der Mikromotivelemente liegen dabei mit Vorteil zwischen etwa 5 µm und etwa 50 µm, vorzugsweise zwischen etwa 10 µm und etwa 35 µm. Zusätzlich wird die gegenüberliegende Seite des Trägers oder der Schicht aus zweitem Lack zweckmäßig mit einer planaren periodischen oder zumindest lokal periodischen Anordnung einer Vielzahl von Mikrofokussierelementen zur moire-vergrößerten Betrachtung der Mikromotivelemente des Motivbilds versehen.

Die Mikrofokussierelemente werden vorzugsweise durch nichtzylindrische Mikrolinsen, insbesondere durch Mikrolinsen mit einer kreisförmigen oder polygonal begrenzten Basisfläche gebildet.

In einer vorteilhaften Verfahrensvariante werden die Mikrofokussierelemente in die Schicht aus zweitem Lack während des In-Kontakt-Bringens des Schritts c) eingeprägt. Die Anordnung von Mikrofokussierelementen kann dann insbesondere zur Ausbildung von Hohlspiegeln zumindest bereichsweise mit einer reflektierenden Oberfläche ausgestattet werden. Beispielsweise kann die Anordnung von Mikrofokussierelementen mit einer Metallisierung, insbesondere durch Bedampfung, versehen werden. Zusätzlich zu oder anstelle der bereichsweise reflektierenden Oberfläche kann die Anordnung von Mikrofokussierelementen auch mit einer Schutzschicht versehen werden, deren Brechungsindex um mindestens 0,3 von dem Brechungsindex der Mikrofokussierelemente abweicht.

Die Mikrostruktur kann auch mit Mikrostrukturelementen, insbesondere mit Mikromotivelementen mit zwei oder mehr unterschiedlichen Farben, gebildet werden. Insbesondere können die Mikrostrukturelemente in Teilgruppen gebildet werden, die bei Betrachtung jeweils den Eindruck einer Mischfarbe erzeugen. Solche Teilgruppen können etwa durch jeweils drei Mikrostrukturelemente gleichartiger Form gebildet werden, die jeweils in einer Grundfarbe, beispielsweise Rot, Grün und Blau, aufgebracht sind. Aufgrund der Kleinheit der Mikrostrukturelemente sind die Einzelfarben für den Betrachter nicht auflösbar, er nimmt vielmehr eine Mischfarbe wahr, deren Farbton und Sättigung von den relativen Strichbreiten und Strukturtiefen der drei beteiligten Mikrostrukturelemente der Teilgruppen abhängt.

Die Färbung der Mikrostrukturelemente kann durch verschiedene lösliche und pigmenthaltige Farbstoffe hervorgerufen werden, wobei Farbstoffe bevorzugt sind, die bei geringen Strichstärken und Schichtdicken hohe Farbsättigungswerte und Kontraste erzeugen. Die Pigmentkorngröße von Pigmentfarben wird zweckmäßig auf die Strichstärken und Schichtdicken des zu übertragenden ersten Lacks abgestimmt.

Im Allgemeinen ist die Schicht aus zweitem Lack bei den entsprechenden Ausgestaltungen transparent ausgeführt, um den Farbeindruck der Mikrostrukturelemente nicht zu beeinträchtigen. Die Schicht aus zweitem Lack kann jedoch auch gezielt eingefärbt sein, um besondere Färbungen oder Farbeffekte zu erzielen.

Die Schicht aus gehärtetem zweitem Lack und/oder der Träger mit der aufgebrachten Mikrostruktur kann neben den erwähnten Elementen mit einer oder mehreren Funktionsschichten für den Einsatz als Sicherheitselement für Sicherheitspapiere, Wertdokumente und dergleichen ausgestattet werden, wobei insbesondere Schichten mit visuell und/oder maschinell erfassbaren Sicherheitsmerkmalen, Schutz- oder Deckschichten, Klebeschichten, Heißsiegelausstattungen und dergleichen in Betracht kommen.

Zum Schutz vor Fälschungsangriffen und/oder zur Erleichterung der Weiterverarbeitung wird die auf die Schicht aus zweitem Lack aufgebrachte vorzugsweise farbige Mikrostruktur mit Vorteil mit einer transparenten Überlackierung versehen.

Die bahnförmige Kunststofffolie ist in einer vorteilhaften Ausgestaltung zu einer Rolle aufgewickelt, um eine abrollbare Werkzeugform bereitzustellen. Die Vertiefungen der bahnförmigen Kunststofffolie können dabei mit einem härtbaren farblosen oder farbigen Lack befüllt sein, wobei der Lack in den Vertiefungen der bahnförmigen Kunststofffolie vorzugsweise physikalisch getrocknet und/oder vorgehärtet ist.

Gemäß einer anderen vorteilhaften Ausgestaltung der Werkzeugform ist die bahnförmige Kunststofffolie als umlaufendes Band ausgebildet, insbesondere als ein über zwei oder mehr Rollen oder andere geeignete Führungsmittel geführtes umlaufendes Band.

Zur Unterstützung der vollständigen Entleerung sind die Vertiefungen der bahnförmigen Kunststofffolie vorzugsweise mit Trennmitteln versehen.

Die Erfindung umfasst ferner ein Verfahren zum Herstellen eines Gegenstands, insbesondere Datenträgers oder Sicherheitselements, mit einer in der oben beschriebenen Art erzeugten farbigen oder farblosen Mikrostruktur. Die Mikrostruktur ist dabei bevorzugt durch Mikrostrukturelemente mit einer Strichstärke zwischen etwa 1 µm und etwa 10 µm und/oder mit einer Strukturtiefe zwischen etwa 1 µm und etwa 20 µm, vorzugsweise zwischen etwa 1 µm und etwa 10 µm, gebildet.

Bevorzugt wird die Mikrostruktur aus einem strahlungsgehärteten ersten Lack gebildet.

In einer vorteilhaften Ausgestaltung kann die Mikrostruktur auf einem mit einer Schicht aus zweitem Lack versehenen Träger, insbesondere einem mit einer strahlungsgehärteten zweiten Lackschicht versehenen Träger aufgebracht werden. Der Träger kann insbesondere eine transparente Kunststofffolie oder eine Papierschicht umfassen. Mit Vorteil weist der Träger eine Dicke zwischen etwa 5 µm und etwa 23 µm, vorzugsweise zwischen etwa 5 µm und etwa 12 µm, auf. Die zweite Lackschicht kann insbesondere mit einer Schichtstärke von weniger als etwa 5 µm, vorzugsweise von weniger als etwa 3 µm auf den Träger aufgebracht sein.

Gemäß einer bevorzugten Weiterbildung enthält der Gegenstand eine mikrooptische Moire-Vergrößerungsanordnung der bereits beschriebenen Art. Dazu ist vorgesehen, dass die Mikrostruktur ein Motivbild aus einer planaren periodischen oder zumindest lokal periodischen Anordnung einer Vielzahl von Mikromotivelementen bildet, wobei die lateralen Abmessungen der Mikromotivelemente zwischen etwa 5 µm und etwa 50 µm, vorzugsweise zwischen etwa 10 µm und etwa 35 µm liegen. Zweckmäßig ist auf der gegenüberliegenden Seite des Trägers oder der Schicht aus zweitem Lack weiter eine planare periodische oder zumindest lokal periodische Anordnung einer Vielzahl von Mikrofokussierelementen zur moire-vergrößerten Betrachtung der Mikromotivelemente des Motivbilds vorgesehen. Die lateralen Abmessungen der Mikrofokussierelemente liegen dabei vorteilhaft zwischen etwa 5 µm und etwa 50 µm, vorzugsweise zwischen etwa 10 µm und etwa 35 µm.

In einer bevorzugten Ausgestaltung der Erfindung bilden die Anordnung von Mikromotivelementen und die Anordnung von Mikrofokussierelementen zumindest lokal jeweils ein zweidimensionales Bravais-Gitter, wobei die Anordnung von Mikromotivelementen und/oder die Anordnung von Mikrofokussierelementen ein Bravais-Gitter mit der Symmetrie eines Parallelogramm-Gitters bildet.

In einer vorteilhaften Ausgestaltung sind die Mikrofokussierelemente direkt in die Schicht aus zweitem Lack eingeprägt.

Der Träger und/oder die Schicht aus zweitem Lack bilden bei diesen Ausgestaltungen eine optische Abstandsschicht für das Motivbild und die Anordnung von Mikrofokussierelementen. Vorzugsweise sind die Mikrofokussierelemente durch nichtzylindrische Mikrolinsen, insbesondere durch Mikrolinsen mit einer kreisförmigen oder polygonal begrenzten Basisfläche, gebildet.

Die Anordnung von Mikrofokussierelementen kann zumindest bereichsweise mit einer reflektierenden Oberfläche ausgestattet sein. Zusätzlich zu oder anstelle der bereichsweise reflektierenden Oberfläche kann die Anordnung von Mikrofokussierelementen auch mit einer Schutzschicht versehen sein, deren Brechungsindex um mindestens 0,3 von dem Brechungsindex der Mikrofokussierelemente abweicht.

Die vorzugsweise farbige Mikrostruktur kann weiter mit einer transparenten Überlackierung versehen sein, um sie vor Fälschungsangriffen zu schützen oder die weitere Verarbeitung, beispielsweise die Erzeugung von Negativschrift in aufgebrachten metallischen oder farbkippenden Schichten, zu erleichtern. Der in der Anmeldung verwendete Begriff "Negativschrift" umfasst Aussparungen beliebiger Form, also jede Nicht-Vollflächigkeit in einer im Wesentlichen nicht transparenten Beschichtung. Die Aussparungen können z. B. als Buchstaben, Zahlen oder Muster irgendwelcher Art, insbesondere als Linienmuster vorliegen. Die Herstellung einer Negativschrift kann auf an sich bekannte Weise erfolgen, z. B. durch Einwirken eines Lasers in eine ablationsfähige Schicht oder gemäß dem in der WO 99/13157 beschriebenen "Waschverfahren", deren Offenbarungsgehalt insoweit zum Gegenstand der vorliegenden Anmeldung gemacht wird.

In einer bevorzugten Ausgestaltung stellt der Gegenstand ein Sicherheitselement, insbesondere einen Sicherheitsfaden, eine Abdeckfolie für eine Banknote mit Loch, einen aufgebrachten Sicherheitsstreifen, ein Etikett oder ein selbsttragendes Transferelement zum Aufbringen auf einen Datenträger dar. Das Sicherheitselement kann dazu beispielsweise heißsiegelfähig ausgestattet sein. Die Gesamtdicke des Sicherheitselements liegt zweckmäßig zwischen etwa 20 µm und etwa 60 µm, vorzugsweise zwischen etwa 30 µm und etwa 50 µm.

Es ist ebenfalls bevorzugt, dass der Gegenstand ein Datenträger, insbesondere eine Banknote, ein Wertdokument, ein Pass, eine Ausweiskarte oder eine Urkunde ist.

Der Gegenstand mit der aufgebrachten Mikrostruktur kann darüber hinaus mit einer oder mehreren Funktionsschichten, insbesondere mit Schichten mit visuell und/oder maschinell erfassbaren Sicherheitsmerkmalen, ausgestattet sein. Dabei kommen beispielsweise vollflächige oder teilflächige reflektierende, hochbrechende oder farbkippende Schichten infrage, oder auch polarisierende oder phasenschiebende Schichten, opake oder transparente leitfähige Schichten, weich- oder hartmagnetische Schichten, oder fluoreszierende oder phosphoreszierende Schichten.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: eine schematische Darstellung einer Banknote mit einem eingebetteten Sicherheitsfaden und einem aufgeklebten Transferelement,
- Fig. 2: schematisch den Schichtaufbau eines erfindungsgemäßen Sicherheitsfadens im Querschnitt,
- Fig. 3: eine schematische Darstellung des Erzeugens einer Mikrostruktur auf einem mit einer Lackschicht versehenen Träger mit einer erfindungsgemäßen bahnförmigen Kunststofffolie,
- Fig. 4: eine schematische Darstellung des In-Kontakt-Bringens der Oberfläche einer bahnförmigen Kunststofffolie mit einem mit einer Lackschicht versehenen Träger, und
- Fig. 5: eine schematische Darstellung des Erzeugens einer Mikrostruktur auf einer Lackschicht nach einem weiteren Ausführungsbeispiel der Erfindung.

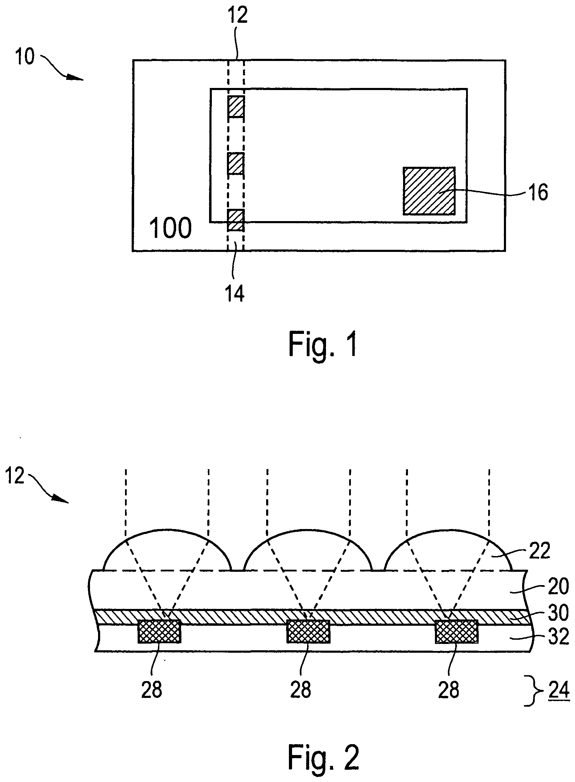

Die Erfindung wird nun am Beispiel eines Sicherheitselements für eine Banknote erläutert. Fig. 1 zeigt dazu eine schematische Darstellung einer Banknote 10, die mit zwei Sicherheitselementen 12 und 16 nach Ausführungsbeispielen der Erfindung versehen ist. Das erste Sicherheitselement stellt einen Sicherheitsfaden 12 dar, der in bestimmten Fensterbereichen 14 an der Oberfläche der Banknote 10 hervortritt, während er in den dazwischen liegenden Bereichen im Inneren der Banknote 10 eingebettet ist. Das zweite Sicherheitselement ist durch ein aufgeklebtes Transferelement 16 beliebiger Form gebildet. Das Sicherheitselement 16 kann auch in Form einer Abdeckfolie, eines Sicherheitsstreifens, eines Transferelements oder Etiketts ausgebildet sein, die über einem Fensterbereich oder einer durchgehenden Öffnung der Banknote angeordnet sind.

Sowohl der Sicherheitsfaden 12 als auch das Transferelement 16 können mikrooptische Strukturen, insbesondere eine Moire-Vergrößerungsanordnung mit einer Mikrostruktur aus farbigen Mikromotivelementen nach einem Ausführungsbeispiel der Erfindung enthalten. Die Funktionsweise und das besondere Herstellungsverfahren für derartige Anordnungen werden im Folgenden anhand des Sicherheitsfadens 12 näher beschrieben.

Fig. 2 zeigt schematisch den Schichtaufbau des Sicherheitsfadens 12 im Querschnitt. Der Sicherheitsfaden 12 enthält einen Träger 20 in Form einer transparenten Kunststofffolie, im Ausführungsbeispiel einer etwa 12 µm dicken Polyethylenterephthalat(PET)-Folie. Die Oberseite der transparenten Kunststofffolie 20 ist mit einer rasterförmigen Anordnung von Mikrolinsen 22 versehen, die auf der Oberfläche der Trägerfolie ein zweidimensionales Bravais-Gitter mit einer vorgewählten Symmetrie bilden. Der einfacheren Darstellung halber wird nachfolgend von einer hexagonalen Gittersymmetrie ausgegangen, auch wenn das Bravais-Gitter nach der Erfindung wegen der höheren Fälschungssicherheit eine niedrigere Symmetrie und damit eine allgemeinere Form, insbesondere die Symmetrie eines Parallelogramm-Gitters aufweisen kann.

Der Abstand benachbarter Mikrolinsen 22 ist vorzugsweise so gering wie möglich gewählt, um eine möglichst hohe Flächendeckung und damit eine kontrastreiche Darstellung zu gewährleisten. Die sphärisch oder asphärisch ausgestalteten Mikrolinsen 22 weisen einen Durchmesser zwischen 5 µm und 50 µm, vorzugsweise lediglich zwischen 10 µm und 35 µm, auf und sind daher mit bloßem Auge nicht zu erkennen.

Auf der Unterseite der transparenten Kunststofffolie 20 ist eine Motivschicht 24 angeordnet, die eine ebenfalls rasterförmige Anordnung von Mikromotivelementen 28, insbesondere identischen Mikromotivelementen 28 enthält. Auch die Anordnung der Mikromotivelemente 28 bildet ein zweidimensionales Bravais-Gitter mit einer vorgewählten Symmetrie, wobei zur Illustration wieder eine hexagonale Gittersymmetrie angenommen wird.

Wie in Fig. 2 durch den Versatz der Mikromotivelemente 28 gegenüber den Mikrolinsen 22 angedeutet, unterscheidet sich das Bravais-Gitter der Mikromotivelemente 28 in seiner Symmetrie und/oder in der Größe seiner Gitterparameter geringfügig von dem Bravais-Gitter der Mikrolinsen 22, um den gewünschten Moire-Vergrößerungseffekt zu erzeugen. Die Gitterperiode und der Durchmesser der Mikromotivelemente 28 liegen dabei in derselben Größenordnung wie die der Mikrolinsen 22, also im Bereich von 5 µm bis 50 µm, vorzugsweise von 10 µm bis 35 µm, so dass auch die Mikromotivelemente 28 mit bloßem Auge nicht zu erkennen sind.

Die optische Dicke der transparenten Kunststofffolie 20 und die Brennweite der Mikrolinsen 22 sind so aufeinander abgestimmt, dass sich die Mikromotivelemente 28 etwa im Abstand der Linsenbrennweite befinden. Aufgrund der sich geringfügig unterscheidenden Gitterparameter sieht der Betrachter bei Betrachtung von oben durch die Mikrolinsen 22 hindurch jeweils einen etwas anderen Teilbereich der Mikromotivelemente 28, so dass die Vielzahl der Mikrolinsen 22 insgesamt ein vergrößertes Bild der Mikromotivelemente 28 erzeugt. Die sich ergebende Moire-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1%, so ergibt sich eine 100-fache Moire-Vergrößerung. Für eine ausführlichere Darstellung der Funktionsweise und vorteilhafter Anordnungen der Mikromotivelemente und der Mikrolinsen wird auf die Druckschriften DE 10 2005 062132 A1 und WO 2007/076952 A2 verwiesen, deren Offenbarungsgehalt insoweit in die vorliegende Anmeldung aufgenommen wird.

Bei derartigen Moire-Vergrößerungsanordnungen wird das erfindungsgemäße Verfahren mit Vorteil dazu eingesetzt, Motivbilder mit farbigen Mikromotivelementen zu schaffen und dabei die Gesamtdicke der Moiré-Vergrößerungsanordnungen so gering zu halten, dass sie als Sicherheitselemente in Wertdokumente und Banknoten eingebracht werden können. Der Sicherheitsfaden 12 wird dazu beispielsweise mit einer Heißsiegelausstattung 32 versehen. Alternativ oder zusätzlich können mit dem erfindungsgemäßen Verfahren mehrfarbige Motivbilder erzeugt werden, die sogar Mischfarbendarstellungen, beispielsweise Darstellungen im RGB-System, ermöglichen.

Die Erzeugung des Mikrolinsenrasters auf der transparenten Kunststofffolie 20 kann dabei in bekannter Weise mittels Prägung erfolgen, wobei sowohl thermoplastisch verformbare Lacke als auch UV-härtende Lacke zum Einsatz kommen können. Aufgrund der möglichen besseren Abformung ist gegenwärtig allerdings das strahlungshärtende Prägen UV-härtender Lacke bevorzugt. Als besonders zweckmäßig hat sich das Prägen UV-härtender Lacke im sogenannten Casting-Modus herausgestellt, bei dem ganz auf eine Vorhärtung des Lacks vor dem eigentlichen Prägevorgang verzichtet wird. Für eine möglichst gute Verankerung der geprägten Mikrolinsenanordnung bietet sich eine Druckvorbehandlung der transparenten Kunststofffolie 20 an.

In weiteren für die Erfindung besonders bedeutsamen Verfahrensschritten wird eine Anordnung von Mikromotivelementen 28 voll- oder teilflächig auf die den Mikrolinsen 22 gegenüberliegende Seite der transparenten Kunststofffolie 20 aufgebracht.

Dazu wird die Kunststofffolie 20 in einem Vorbereitungsschritt vorbehandelt, indem eine Lackschicht 30 aus transparentem, UV-härtendem Lack auf die Kunststofffolie 20 aufgebracht wird. Um die Verankerung der Lackschicht 30 auf der Kunststofffolie 20 zu erhöhen, bietet sich die Verwendung einer speziell druckvorbehandelten Kunststofffolie an. Dieser Vorbereitungsschritt kann vor oder auch nach dem Prägen der Mikrolinsenanordnung durchgeführt werden.

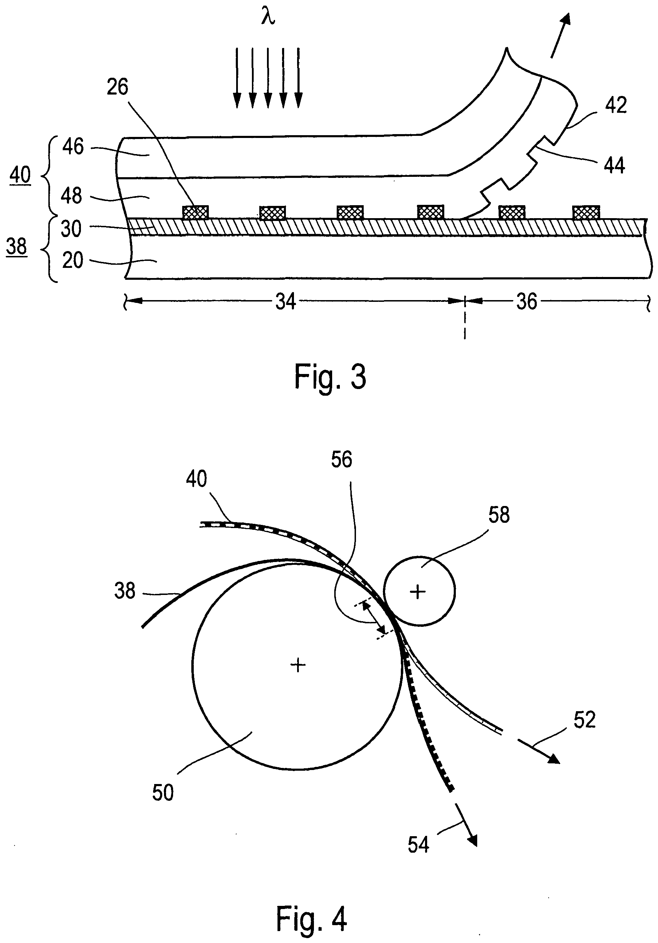

Mit Bezug auf Fig. 3 wird zum Erzeugen einer mikrooptischen Struktur, insbesondere der farbigen Mikrostruktur, eine Werkzeugform 40 in Form einer bahnförmigen Kunststofffolie eingesetzt, deren Oberfläche eine Anordnung von Erhebungen 42 und Vertiefungen 44 in Gestalt der gewünschten Mikrostruktur aufweist. Wie aus der nachfolgenden schematischen Darstellung deutlich wird, können die Mikrostrukturelemente sowohl als Vertiefungen als auch als Erhebungen in der bahnförmigen Kunststofffolie ausgebildet sein. Für die dargestellte Erzeugung farbiger Mikrostrukturelemente einer Moire-Vergrößerungsanordnung erhält man im ersten Fall auf der Lackschicht 30 farbige Mikrostrukturelemente in transparentem Umfeld, in letzterem Fall transparente Mikrostrukturelemente in farbigem Umfeld. Der Informationsgehalt der aufgebrachten Mikrostrukturelemente ist in beiden Fällen gleich.

Die Herstellung der Werkzeugform erfolgt analog bekannter Verfahren zur Herstellung geprägter Folien. Dabei werden Vertiefungen 44 mithilfe geeigneter Prägeformen unter Anwendung von Druck und Temperatur beispielsweise in eine Kunststofffolie eingeprägt (sogenanntes "Hard-Embossing"). Alternativ können auch mit thermoplastisch verformbaren Prägelacken versehene Kunststofffolien verwendet werden. Aufgrund der möglichen besseren Abformung sind gegenwärtig allerdings mit strahlungshärtenden, insbesondere UV-härtenden Prägelacken versehene Kunststofffolien bevorzugt, die mit geringem Druck und einer geringen Temperaturbelastung bearbeitet werden können. Eine solche schonende Prägung führt zu einem geringeren Schrumpf und geringeren Verzügen der Kunststofffolien, die sich insbesondere bei der Verwendung in Moire-Vergrößerungsanordnungen signifikant auswirken können. Darüber hinaus lässt sich eine höhere Prägegenauigkeit erzielen.

Prägestrukturen können durch an sich bekannte Verfahren ohne Weiteres mit höchster Genauigkeit der Abmessungen ihrer Erhebungen und Vertiefungen hergestellt werden. Im Ausführungsbeispiel ist auf die Oberseite einer transparenten Trägerfolie 46, beispielsweise einer PET-Folie, eine UV-gehärtete Prägelackschicht 48 aufgebracht, in die eine Prägestruktur mit Erhebungen 42 und Vertiefungen 44 in Form einer gewünschten Mikrostruktur eingeprägt ist.

Die Dicke der Kunststofffolien und Prägelackschichten richtet sich dabei allein nach den Erfordernissen des Prägevorgangs. Geeignet sind deshalb auch relativ stabile Folien mit Dicken zwischen etwa 36 µm und etwa 50 µm. Der Prägelack ist je nach Anforderung an die Strukturtiefe der gewünschten Mikrostruktur in einer Schichtdicke zwischen etwa 1 µm und etwa 15 µm aufgetragen.

Für eine möglichst gute Verankerung der auf die Kunststofffolie aufgebrachten Prägelackschichten bietet sich eine Druckvorbehandlung der transparenten Trägerfolie 46 an.

Die Vertiefungen 44 der bahnförmigen Kunststofffolie 40 werden zunächst mit einem UV-härtbaren farblosen oder farbigen Lack 26 befüllt und ein möglicher Lacküberschuss mittels Rakel, Wischzylinder oder anderer geeigneter technischer Hilfsmittel entfernt. Wie bereits erwähnt, kann beim Einsatz eines geeigneten niedrigviskosen Lackes unter Umständen auch auf das Entfernen des Lacküberschusses verzichtet werden.

Anschließend werden die befüllten Vertiefungen 44 der bahnförmigen Kunststofffolie 40 an die mit der Lackschicht 30 vorbehandelte Seite des Trägers 20, hier einer transparenten Kunststofffolie, herangeführt und in direkten Kontakt gebracht. Im Kontakt (Bereich 34) werden das Lackmaterial 26 in den Vertiefungen der bahnförmigen Kunststofffolie 40 und der zugehörige Abschnitt der Lackschicht 30 durch energiereiche Strahlung λ, im Ausführungsbeispiel UV-Strahlung, gehärtet, wobei durch die Polymerisation eine feste Verbindung zwischen dem farbigen oder farblosen Lack 26 in den Vertiefungen und der transparenten Lackschicht 30 entsteht. Auch wenn die Bestrahlung des Kontaktbereichs 34 hier von der Seite der bahnförmigen Kunststofffolie 40 her gezeigt ist, können geeignete Strahlungsquellen selbstverständlich auch gegenüber der außen liegenden Seite des Trägers 20 angeordnet sein.

Um eine Durchmischung der Lackanteile in den Vertiefungen der bahnförmigen Kunststofffolie 40 und der Lackschicht 30 in Kontakt vor der Aushärtung zu unterdrücken und damit das optische Erscheinungsbild der fertigen Anordnung durch Vermeidung insbesondere von Unschärfen zu verbessern, kann es zweckmäßig sein, eine leichte Vorhärtung des farbigen oder farblosen Lacks 26 in der bahnförmigen Kunststofffolie 40 und/oder der Lackschicht 30 auf der transparenten Kunststofffolie 20 vorzunehmen.

Die Vorhärtung des farbigen oder farblosen Lacks in den Vertiefungen 44 kann darüber hinaus auch vorteilhaft eingesetzt werden, um zu verhindern, dass es beim eventuell notwendigen Aufwickeln der bahnförmigen Kunststofffolie 40, beispielsweise vor ihrem weiteren Einsatz in dem erfindungsgemäßen Verfahren, zu einem Übertrag des farbigen oder farblosen Lacks 26 auf die Rückseite der Kunststofffolie 40 kommt. Bei Verwendung von nicht strahlenhärtenden Lacken bietet es sich aus diesen Gründen ebenfalls an, diese anzutrocknen.

Zuletzt wird die Oberfläche der bahnförmigen Kunststofffolie 40 wieder von dem beschichteten Träger 38 entfernt (Bereich 36), wobei der nunmehr mit der Kunststofffolie 20 über die Lackschicht 30 verbundene, gehärtete Lack 26 aus den Vertiefungen 44 der bahnförmigen Kunststofffolie 40 gezogen wird. Da der Verbund aus gehärtetem Lack 26 aus den Vertiefungen der bahnförmigen Kunststofffolie 40 und der Lackschicht 30 mechanisch wie eine vollflächige Beschichtung wirkt, wird das Herausziehen der farblosen oder farbigen Lackanteile 26 aus der bahnförmigen Kunststofffolie 40 bei der Entformung positiv unterstützt.

Bei Verwendung der farbigen oder farblosen Mikrostruktur in Moire-Vergrößerungsanordnungen kann auf die der Mikrostruktur gegenüberliegende Seite der transparenten Kunststofffolie 20 abschließend eine Anordnung von Mikrolinsen 22 aufgebracht werden, die hier der einfacheren Darstellung halber weggelassen ist. Die Anordnung von Mikrolinsen 22 kann auch bereits vor Erzeugen der farbigen oder farblosen Mikrostruktur auf der transparenten Kunststofffolie 20 vorliegen.

Damit bei der Trennung der beiden Folien 40 und 38 lediglich der farbige oder farblose Lack 26 aus den Vertiefungen 44 abgenommen wird, sollte die Lackschicht 30 eine gute Haftung in Bezug auf den Träger 20 aufweisen. Insbesondere sollte die Haftung des Trägers 20 zu der Lackschicht 30 größer sein als die Haftung der bahnförmigen Kunststofffolie 40 zu der Lackschicht 30.

Um leichteres Entformen im Bereich 36 zu gewährleisten, kann die Oberfläche der bahnförmigen Kunststofffolie 40 vor dem Befüllen der Vertiefungen 44 mit dem UV-härtbaren farblosen oder farbigen Lack 26 zunächst mit einem Trennmittel, beispielsweise einer niederprozentigen Lösung von Octylphosphonsäure in organischen Lösungsmitteln, wie z.B. Essigester, versehen werden.

Allerdings wird das Druckergebnis auch in dem Fall, dass die Vertiefungen 44 in der als Werkzeugform dienenden bahnförmigen Kunststofffolie 40 nicht vollständig entleert werden, nur lokal beeinträchtigt. Bei Verwendung in Moire-Vergrößerungsanordnungen können zudem auch bei unvollständiger Entleerung der Vertiefungen 44 und damit unvollständiger Mikromotivelemente 28 regelmäßige Strukturen beim Betrachten durch die Mikrolinsenanordnung sichtbar werden, da nach dem oben erläuterten Funktionsprinzip jeweils viele Einzelstrukturen - hier Mikromotivelemente 28 - zu der sichtbaren Struktur gemittelt werden.

Die Kunststofffolie 20 trägt nach dem Trennen eine Schicht aus strahlengehärtetem Lack 30 mit aufsitzenden farbigen Mikromotivelementen 28. Da es beim In-Kontakt-Bringen der bahnförmigen Kunststofffolie 40 mit der beschichteten Kunststofffolie 20 nicht zu Belastungen wie etwa beim Prägen kommt, können sowohl die transparente Kunststofffolie 20 als auch die Lackschicht 30 sehr dünn sein. Beispielsweise kann die transparente Kunststofffolie 20 eine Dicke zwischen etwa 5 µm und etwa 23 µm, vorzugsweise lediglich zwischen etwa 5 µm und etwa 12 µm, aufweisen, während die Lackschicht 30 mit einer Schichtstärke von weniger als etwa 5 µm, vorzugsweise von weniger als etwa 3 µm aufgebracht sein kann.

Ein besonderer Vorteil der Härtung in der bahnförmigen Kunststofffolie im Bereich 34 liegt ferner darin, dass hohe Schichtdicken farbloser und farbiger Lacke übertragen werden können, so dass sich bei Verwendung farbiger Lacke sehr kontrastreiche Darstellungen erzielen lassen. Zudem erlaubt das Verfahren die Herstellung feinster Mikrostrukturen mit höchster Auflösung, wie sie beispielsweise für Moire-Vergrößerungsanordnungen erwünscht sind, ohne dass die aufgebrachten Strukturen nach dem Entformen an Detailreichtum verlieren würden.

Die von der Prägung der bahnförmigen Kunststofffolie 40 mit einer Prägeform herrührenden Rekombinationsnähte und gegebenenfalls Unebenheiten wirken sich aufgrund der hohen Flexibilität der Kunststofffolie beim In-Kontakt-Bringen in dem erfindungsgemäßen Verfahren kaum aus. Ein exaktes Abnehmen eines eventuellen Überschusses des farbigen oder farblosen Lacks ist daher möglich. Die Folienflexibilität trägt ferner dazu bei, dass auch die eingeprägten Schweißnähte der Prägeform für die eingesetzten Rakel oder Wischzylinder keine zerstörende Wirkung zeigen, was wiederum die Standzeiten der Rakel oder Wischzylinder verlängert.

Das In-Kontakt-Bringen der bahnförmigen Kunststofffolie 40 mit dem beschichteten Träger 38 kann auf verschiedene Weise erfolgen. Eine erste Variante ist in Fig. 4 schematisch dargestellt. Bei dieser Variante werden die bahnförmige Kunststofffolie 40, die mit einem farbigen oder farblosen Lack 26 befüllte Vertiefungen 44 aufweist, und die mit der Lackschicht 30 versehene transparente Kunststofffolie 20 unter unterschiedlichen Winkeln auf einen Zylinder 50 geführt.

Die bahnförmige Kunststofffolie 40 und/oder der beschichtete Träger 38 können beispielsweise von hier nicht gezeigten Vorratsrollen abgerollt werden. Der farbige oder farblose Lack 26 in den Vertiefungen 44 der bahnförmigen Kunststofffolie 40 sowie die Lackschicht 30, auf die die Mikrostruktur übertragen werden soll, sind dabei zweckmäßig vorgehärtet.

Nach dem Kontakt und der (vollständigen) Härtung des Lacks 26 und der Lackschicht 30 werden die bahnförmige Kunststofffolie 40 und der beschichtete Träger 38 durch Abzug in unterschiedliche Richtungen wieder voneinander getrennt und der farbige oder farblose Lack wird, wie vorstehend beschrieben, aus den Vertiefungen 44 der bahnförmigen Kunststofffolie 40 auf die Lackschicht 30 des Trägers 20 übertragen. Die Transportrichtungen der bahnförmigen Kunststofffolie 40 und des beschichteten Trägers 38 sind mit dem Pfeil 52 bzw. 54 bezeichnet und können z. B. durch entsprechende Zugeinrichtungen hervorgerufen werden.

Der Kontaktbereich 56 der Folien kann durch Einstellung der entsprechenden Auflaufwinkel der bahnförmigen Kunststofffolie 40 und des beschichteten Trägers 38 auf den Zylinder 50 vorgegeben werden. Optional kann im Kontaktbereich 56 ein Gegendruckzylinder 58 vorgesehen sein. Geeignete Strahlungsquellen zur Härtung des Lacks 26 und der Lackschicht 30 sind hier der einfacheren Darstellung halber weggelassen, können jedoch beispielsweise im Zylinder 50 angeordnet sein, der in diesem Fall für die Strahlung durchlässig sein muss. Um den Kontaktbereich 56 der Folien zu erweitern, können die bahnförmige Kunststofffolie 40 und der beschichtete Träger 38 auch mithilfe zweier hier nicht gezeigter Rollen, die auf beiden Seiten des Zylinders 50 zu diesem benachbart angeordnet sind, um einen Teil des Zylinderumfangs zusammen geführt werden. Die Folien können dann im Kontaktbereich 56 mit entsprechend angeordneten Strahlungsquellen bestrahlt werden.

Gemäß einer zweiten hier nicht gezeigten Variante kann das In-Kontakt-Bringen der bahnförmigen Kunststofffolie 40 mit dem beschichteten Träger 38 in einer Kaschieranlage erfolgen. Dabei werden die Kunststofffolien zusammen in einen Kaschierspalt geführt und dort unter linienförmiger Beaufschlagung mit Druck miteinander in Kontakt gebracht, wobei der Lack 26 in den Vertiefungen 44 und die Lackschicht 30 gleichzeitig gehärtet werden.

Die bahnförmige Kunststofffolie 40 kann nach der Trennung und der Entleerung der Vertiefungen wieder aufgerollt und erneut als Werkzeugform verwendet werden. Alternativ kann die bahnförmige Kunststofffolie 40 auch in Form eines über zwei oder mehr Rollen oder andere geeignete Führungsmittel geführten umlaufenden Bandes eingesetzt werden.

Auch wenn der Einsatz der bahnförmigen Kunststofffolie 40 im Zusammenhang mit dem Erzeugen der Mikromotivelementanordnung näher beschrieben wurde, können selbstverständlich auch die Mikrolinsen 22 einer Moire-Vergrößerungsanordnung oder andere mikrooptische Strukturen, beispielsweise geblazte Gitterstrukturen, DOEs bzw. CGHs, Mikrolinsenstrukturen oder fresnellinsenartige Strukturen mithilfe einer derartigen Werkzeugform auf die Lackschicht 30 der transparenten Kunststofffolie 20 aufgebracht werden.

Die Arbeitsschritte des Erzeugens der Mikrolinsenanordnung und der Mikromotivelemente können in beliebiger Reihenfolge vorgenommen werden. Auch eine gleichzeitige Durchführung, also das gleichzeitige Aufbringen der beiden Anordnungen auf gegenüberliegende Seiten der transparenten Kunststofffolie 20, ist möglich.

Mikromotivelemente 28 mit unterschiedlichen Farben können in mehreren Arbeitsgängen mit mehreren Werkzeugformen erzeugt werden, die jeweils mit unterschiedlich gefärbtem Lack 26 befüllt sind. Alternativ können Mikromotivelemente 28 auch mit einer einzigen Werkzeugform erzeugt werden, die in vorgegebenen Bereichen mit unterschiedlich farbigem Lack befüllt ist.

Die Mikromotivelemente müssen nicht alle in derselben Schicht vorliegen, es lassen sich auch Mehrschichtgestaltungen realisieren. Werden so mehrere Anordnungen von Mikromotivelementen in unterschiedlichen Farben erzeugt, müssen die verschiedenen Anordnungen im Allgemeinen nicht zueinander gepassert werden, da für den Moire-Effekt die relative Orientierung der Mikrolinsenanordnung und der jeweiligen Mikromotivelementanordnung entscheidend ist. Je nach Anwendungsfall kann allerdings auch eine genaue Passerung der Mikromotivelementanordnungen zueinander von Vorteil sein.

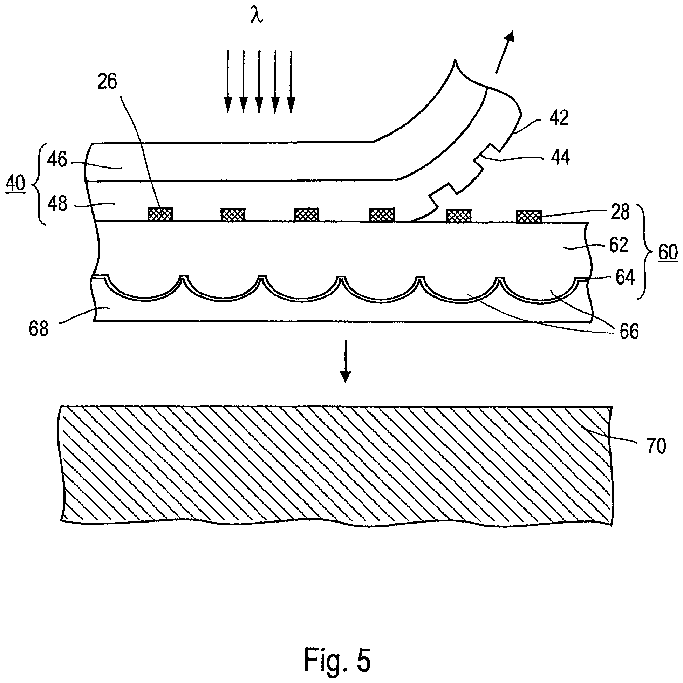

Mit Bezug auf Fig. 5 kann eine farbige Mikrostruktur, im Ausführungsbeispiel eine Mikrostruktur einer farbigen Moié-Vergrößerungsanordnung 60, gemäß einer alternativen Ausgestaltung unter gleichzeitiger Prägung einer Mikrolinsenanordnung erzeugt werden. Dazu wird zunächst eine bahnförmige Kunststofffolie 40 bereitgestellt, in die eine Prägestruktur mit Erhebungen und Vertiefungen in Form der gewünschten Mikrostruktur eingeprägt ist. Im Ausführungsbeispiel ist hierzu auf die Oberseite einer transparenten Trägerfolie 46, z. B. einer PET-Folie, eine UV-gehärtete Prägelackschicht 48 aufgebracht, in die die Prägestruktur mit Erhebungen 42 und Vertiefungen 44 eingeprägt ist.

Die Vertiefungen 44 in der Prägelackschicht 48 der bahnförmigen Kunststofffolie 40 werden zunächst mit einem UV-härtbaren farblosen oder farbigen Lack 26 befüllt und ein möglicher Lacküberschuss mittels Rakel, Wischzylinder oder anderer geeigneter technischer Hilfsmittel entfernt. Wie bereits erwähnt, kann beim Einsatz eines geeigneten niedrigviskosen Lackes unter Umständen auch auf das Entfernen des Lacküberschusses verzichtet werden. Anschließend wird auf die befüllte Prägelackschicht 48 eine UV-härtbare Lackschicht 62 aufgebracht. Gleichzeitig mit der Aushärtung des in den Vertiefungen 44 der bahnförmigen Kunststofffolie 40 liegenden Lacks 26 durch energiereiche Strahlung λ, im Ausführungsbeispiel UV-Strahlung, wird in die Lackschicht 62 eine periodische Anordnung von Mikrolinsen 66 eingeprägt. Auch wenn die Bestrahlung des Kontaktbereichs hier von der Seite der bahnförmigen Kunststofffolie 40 her gezeigt ist, können geeignete Strahlungsquellen selbstverständlich auch gegenüber der Lackschicht 62 angeordnet sein.

Die Anordnung von Mikrolinsen 66 wird anschließend zur Ausbildung einer Anordnung von Hohlspiegeln mit einer reflektierenden Schicht 64, beispielsweise durch Bedampfung mit Metall, versehen.

Nach Aufbringen eines Heißsiegelklebstoffes 68 auf die Anordnung von Hohlspiegeln kann der Verbund aus bahnförmiger Kunststofffolie 40 und Moire-Vergrößerungsanordnung 60 unter Abtrennung der bahnförmigen Kunststofffolie 40 auf ein Substrat 70 aus z. B. Papier oder Kunststoff übertragen werden.

Bei dieser Ausgestaltung des erfindungsgemäßen Verfahrens dient die Lackschicht 62 selbst als Träger für die Mikrostruktur und die Anordnung von Hohlspiegeln 66. Die Dicke der Lackschicht 62 und die Brennweite der Hohlspiegel 66 sind dabei so aufeinander abgestimmt, dass sich die Mikromotivelemente 28 etwa im Abstand der Brennweite der Hohlspiegel 66 befinden.

Auch bei dieser Ausgestaltung kann die Oberfläche der bahnförmigen Kunststofffolie 40 beziehungsweise der Prägelackschicht 48 zur Erleichterung des Entformens mit einem Trennmittel, beispielsweise einer niederprozentigen Lösung von Octylphosphonsäure in organischen Lösungsmitteln, wie z.B. Essigester, versehen werden.

Auch wenn das Erzeugen der Mikrostruktur im Zusammenhang mit einer als beschichtete Trägerfolie ausgestalteten bahnförmigen Kunststofffolie näher beschrieben wurde, kann die Prägestruktur mit Erhebungen und Vertiefungen zur Ausbildung einer erfindungsgemäßen bahnförmigen Kunststofffolie selbstverständlich auch direkt in eine Kunststofffolie eingebracht sein.

## Patentansprüche

1. Verfahren zum Erzeugen einer farbigen oder farblosen Mikrostruktur, bei dem
a) eine Werkzeugform (40) in Form einer bahnförmigen Kunststofffolie bereitgestellt wird, deren Oberfläche eine Anordnung von Erhebungen (42) und Vertiefungen (44) in Gestalt der gewünschten Mikrostruktur aufweist,
b) die Vertiefungen (44) der bahnförmigen Kunststofffolie (40) mit einem härtbaren farbigen oder farblosen ersten Lack (26) befüllt werden,
c) die Oberfläche der bahnförmigen Kunststofffolie (40) mit einer Schicht aus einem härtbaren zweiten Lack (30) in Kontakt gebracht wird,
d) der in Kontakt mit dem zweiten Lack (30) stehende erste Lack (26) in den Vertiefungen der bahnförmigen Kunststofffolie (40) zusammen mit der Schicht aus dem zweiten Lack (30) gehärtet und dabei mit der Schicht aus zweitem Lack (30) verbunden wird, und
e) die Oberfläche der bahnförmigen Kunststofffolie (40) wieder von dem zweiten gehärteten Lack (30) entfernt wird, so dass der mit dem zweiten Lack (30) verbundene, gehärtete erste Lack (26) aus den Vertiefungen (44) der bahnförmigen Kunststofffolie (40) gezogen wird.

2. Verfahren nach Anspruch 1, **dadurch gekennzeichnet, dass** die Anordnung von Erhebungen und Vertiefungen in die Oberfläche der bahnförmigen Kunststofffolie eingeprägt ist.

3. Verfahren nach Anspruch 1 oder 2, **dadurch gekennzeichnet, dass** die bahnförmige Kunststofffolie eine Trägerfolie umfasst, auf die eine oder mehrere Lackschichten aufgebracht sind, in die die Anordnung von Erhebungen und Vertiefungen eingeprägt ist.

4. Verfahren nach Anspruch 3, **dadurch gekennzeichnet, dass** die auf die Trägerfolie der bahnförmigen Kunststofffolie aufgebrachten Lackschichten durch einen thermoplastisch verformten Prägelack oder einen strahlungsgehärteten Prägelack gebildet sind, und/oder dass die Trägerfolie der bahnförmigen Kunststofffolie für eine gute Verankerung der aufgebrachten Lackschichten vorbehandelt ist.

5. Verfahren nach wenigstens einem der Ansprüche 1 bis 4, **dadurch gekennzeichnet, dass** die bahnförmige Kunststofffolie vor dem Befüllen mit dem ersten Lack in Schritt b) zur Unterstützung der vollständigen Entleerung der Vertiefungen mit Trennmitteln versehen wird, und/oder dass die Dicke der bahnförmigen Kunststofffolie zwischen etwa 23 µm und etwa 50 µm liegt.

6. Verfahren nach wenigstens einem der Ansprüche 1 bis 5, **dadurch gekennzeichnet, dass** die Vertiefungen der bahnförmigen Kunststofffolie in Schritt b) mit einem strahlungshärtenden Lack befüllt werden, dass die Oberfläche der bahnförmigen Kunststofffolie in Schritt c) mit einer Schicht aus strahlungshärtendem zweitem Lack in Kontakt gebracht wird, und dass die Schicht aus zweitem Lack zusammen mit dem ersten Lack in den Vertiefungen der bahnförmigen Kunststofffolie in Schritt d) durch Beaufschlagung mit Strahlung, insbesondere mit UV-Strahlung, gehärtet wird, und/oder dass der erste Lack in den Vertiefungen der bahnförmigen Kunststofffolie vor dem In-Kontakt-Bringen des Schritts c) physikalisch getrocknet und/oder vorgehärtet wird.

7. Verfahren nach wenigstens einem der Ansprüche 1 bis 6, **dadurch gekennzeichnet, dass** die Schicht aus dem zweiten Lack vor dem In-Kontakt-Bringen des Schritts c) auf einen Träger aufgebracht wird.

8. Verfahren nach Anspruch 7, **dadurch gekennzeichnet, dass** der Träger für die Schicht aus zweitem Lack für eine gute Verankerung des zweiten Lacks vorbehandelt wird, insbesondere dass der Träger für die Schicht aus zweitem Lack durch eine Druckvorbehandlung vorbehandelt wird.

9. Verfahren nach wenigstens einem der Ansprüche 7 bis 8, **dadurch gekennzeichnet, dass** der Träger für die Schicht aus zweitem Lack eine transparente Kunststofffolie oder eine Papierschicht umfasst, und/ oder dass der Träger eine Dicke zwischen etwa 5 µm und etwa 23 µm, vorzugsweise zwischen etwa 5 µm und etwa 12 µm, aufweist, und/oder dass die Schicht aus zweitem Lack mit einer Schichtstärke von weniger als etwa 5 µm, vorzugsweise von weniger als etwa 3 µm auf den Träger aufgebracht wird.

10. Verfahren nach wenigstens einem der Ansprüche 1 bis 9, **dadurch gekennzeichnet, dass** die Schicht aus zweitem Lack vor dem In-Kontakt-Bringen des Schritts c) physikalisch getrocknet und/oder vorgehärtet wird, und/oder dass ein eventueller Überschuss an farbigem oder farblosem ersten Lack in Schritt b) entfernt wird.

11. Verfahren nach wenigstens einem der Ansprüche 1 bis 10, **dadurch gekennzeichnet, dass** die Mikrostruktur der bahnförmigen Kunststofffolie durch Mikrostrukturelemente mit einer Strichstärke zwischen etwa 1 µm und etwa 10 µm gebildet wird, und/oder dass die Mikrostruktur der bahnförmigen Kunststofffolie durch Mikrostrukturelemente mit einer Strukturtiefe zwischen etwa 1 µm und etwa 20 µm, vorzugsweise zwischen etwa 1 µm und etwa 10 µm, gebildet wird.

12. Verfahren nach wenigstens einem der Ansprüche 1 bis 11, **dadurch gekennzeichnet, dass** als Mikrostruktur ein Motivbild aus einer planaren periodischen oder zumindest lokal periodischen Anordnung einer Vielzahl von Mikromotivelementen aufgebracht wird, insbesondere dass die gegenüberliegende Seite des Trägers oder der Schicht aus zweitem Lack mit einer planaren periodischen oder zumindest lokal periodischen Anordnung einer Vielzahl von Mikrofokussierelementen zur moire-vergrößerten Betrachtung der Mikromotivelemente des Motivbilds versehen wird.

13. Verfahren nach Anspruch 12, **dadurch gekennzeichnet, dass** die Mikrofokussierelemente durch nichtzylindrische Mikrolinsen, insbesondere durch Mikrolinsen mit einer kreisförmigen oder polygonal begrenzten Basisfläche, gebildet werden, und/oder dass die Mikrofokussierelemente in die Schicht aus zweitem Lack während des In-Kontakt-Bringens des Schritts c) eingeprägt werden.

14. Verfahren nach wenigstens einem der Ansprüche 1 bis 13, **dadurch gekennzeichnet, dass** die Schicht aus gehärtetem zweitem Lack und/oder der Träger mit der aufgebrachten Mikrostruktur aus gehärtetem ersten Lack mit einer oder mehreren Funktionsschichten für den Einsatz als Sicherheitselement für Sicherheitspapiere, Wertdokumente oder dergleichen ausgestattet wird, insbesondere mit Schichten mit visuell und/ oder maschinell erfassbaren Sicherheitsmerkmalen, und/oder dass die auf die Schicht aus zweitem Lack aufgebrachte insbesondere farbige Mikrostruktur mit einer transparenten Überlackierung versehen wird.

15. Verfahren zum Herstellen eines Gegenstands, insbesondere Datenträgers oder Sicherheitselements, bei dem auf eine Schicht aus einem härtbaren zweiten Lack mit einem Verfahren nach einem der Ansprüche 1 bis 14 eine farbige oder farblose Mikrostruktur aufgebracht wird.

16. Verfahren nach Anspruch 15, **dadurch gekennzeichnet, dass** die Mikrostruktur aus einem strahlungsgehärteten farbigen oder farblosen ersten Lack gebildet wird, oder dass die Mikrostruktur auf einem mit einer Schicht aus zweitem Lack versehenen Träger, insbesondere einem mit einer strahlungsgehärteten Schicht aus zweitem Lack versehenen Träger aufgebracht wird.

17. Verfahren nach wenigstens einem der Ansprüche 15 bis 16, **dadurch gekennzeichnet, dass** der Gegenstand ein Sicherheitselement,
insbesondere ein Sicherheitsfaden, ein Etikett oder ein Transferelement, ist, vorzugsweise dass das Sicherheitselement heißsiegelfähig ausgestattet ist, oder dass der Gegenstand ein Datenträger, insbesondere eine Banknote, ein Wertdokument, ein Pass, eine Ausweiskarte oder eine Urkunde, ist.

## Claims

1. A method for producing a colored or colorless micropattern, in which
a) a die form (40) in the form of a web-shaped plastic foil is provided whose surface comprises an arrangement of elevations (42) and depressions (44) in the form of the desired micropattern,
b) the depressions (44) in the web-shaped plastic foil (40) are filled with a curable colored or colorless first lacquer (26),
c) the surface of the web-shaped plastic foil (40) is brought into contact with a layer composed of a curable second lacquer (30),
d) the first lacquer (26) that is in the depressions of the web-shaped plastic foil (40) and that is in contact with the second lacquer (30) is cured together with the layer composed of the second lacquer (30) and, at the same time, is joined with the layer composed of the second lacquer (30), and
e) the surface of the web-shaped plastic foil (40) is removed from the second cured lacquer (30) again such that the cured first lacquer (26) that is joined with the second lacquer (30) is pulled out of the depressions (44) in the web-shaped plastic foil (40).

2. The method according to claim 1, **characterized in that** the arrangement of elevations and depressions is embossed in the surface of the web-shaped plastic foil.

3. The method according to claim 1 or 2, **characterized in that** the web-shaped plastic foil comprises a carrier foil to which are applied one or more lacquer layers in which the arrangement of elevations and depressions is embossed.

4. The method according to claim 3, **characterized in that** the lacquer layers applied to the carrier foil of the web-shaped plastic foil are formed by a thermoplastically deformed embossing lacquer or a radiation-cured embossing lacquer, and/or **in that** the carrier foil of the web-shaped plastic foil is pretreated for a good anchoring of the applied lacquer layers.

5. The method according to at least one of claims 1 to 4, **characterized in that,** prior to the filling with the first lacquer in step b), the web-shaped plastic foil is furnished with release agents to support the complete emptying of the depressions, and/or
**in that** the thickness of the web-shaped plastic foil is between about 23 µm and about 50 µm.

6. The method according to at least one of claims 1 to 5, **characterized in that** the depressions in the web-shaped plastic foil are filled in step b) with a radiation-curing lacquer, **in that** the surface of the web-shaped plastic foil is brought into contact in step c) with a layer composed of a radiation-curing second lacquer, and **in that** the layer composed of the second lacquer is cured, together with the first lacquer in the depressions in the web-shaped plastic foil, in step d) by impingement with radiation, especially with UV radiation, and/or **in that** the first lacquer in the depressions in the web-shaped plastic foil is physically dried and/or precured prior to the bringing-into-contact in step c).

7. The method according to at least one of claims 1 to 6, **characterized in that** the layer composed of the second lacquer is applied to a carrier prior to the bringing-into-contact in step c).

8. The method according to claim 7, **characterized in that** the carrier for the layer composed of the second lacquer is pretreated for a good anchoring of the second lacquer, especially **in that** the carrier for the layer composed of the second lacquer is pretreated through a pressure pretreatment.

9. The method according to at least one of claims 7 to 8, **characterized in that** the carrier for the layer composed of the second lacquer comprises a transparent plastic foil or a paper layer, and/or
**in that** the carrier has a thickness between about 5 µm and about 23 µm, preferably between about 5 µm and about 12 µm, and/or
**in that** the layer composed of the second lacquer is applied to the carrier with a layer thickness of less than about 5 µm, preferably of less than about 3 µm.

10. The method according to at least one of claims 1 to 9, **characterized in that** the layer composed of the second lacquer is physically dried and/or precured prior to the bringing-into-contact in step c), and/or **in that** any excess of colored or colorless first lacquer in step b) is removed.

11. The method according to at least one of claims 1 to 10, **characterized in that** the micropattern of the web-shaped plastic foil is formed by micropattern elements having a line width between about 1 µm and about 10 µm, and/or **in that** the micropattern of the web-shaped plastic foil is formed by micropattern elements having a pattern depth between about 1 µm and about 20 µm, preferably between about 1 µm and about 10 µm.

12. The method according to at least one of claims 1 to 11, **characterized in that,** as the micropattern, a motif image composed of a planar periodic or at least locally periodic arrangement of a plurality of micromotif elements is applied, especially
**in that** the opposite side of the carrier or of the layer composed of the second lacquer is furnished with a planar periodic or at least locally periodic arrangement of a plurality of microfocusing elements for the moire-magnified viewing of the micromotif elements of the motif image.

13. The method according to claim 12, **characterized in that** the microfocusing elements are formed by non-cylindrical microlenses, especially by microlenses having a circular or polygonally delimited base area, and/or **in that** the microfocusing elements are embossed in the layer composed of the second lacquer during the bringing-into-contact in step c).

14. The method according to at least one of claims 1 to 13, **characterized in that** the layer composed of the cured second lacquer and/or the carrier having the applied micropattern composed of the cured first lacquer is furnished with one or more functional layers for use as a security element for security papers, value documents or the like, especially with layers having visually and/or machine-perceptible security features, and/or **in that** the especially colored micropattern applied to the layer composed of the second lacquer is furnished with a transparent overcoating.

15. A method for manufacturing an object, especially a data carrier or security element, in which a colored or colorless micropattern is applied to a layer composed of a curable second lacquer with a method according to one of claims 1 to 14.

16. The method according to claim 15, **characterized in that** the micropattern is formed from a radiation-cured colored or colorless first lacquer, or **in that** the micropattern is applied to a carrier furnished with a layer composed of the second lacquer, especially a carrier furnished with a radiation-cured layer composed of the second lacquer.

17. The method according to at least one of claims 15 to 16, **characterized in that** the object is a security element, especially a security thread, a label or a transfer element, preferably **in that** the security element is furnished with heat-sealing capability, or **in that** the object is a data carrier, especially a banknote, a value document, a passport, an identity card or a certificate.

## Revendications

1. Procédé de réalisation d'une microstructure colorée ou incolore, pour lequel
a) une forme d'outil (40) est fournie sous la forme d'une feuille de matière plastique en forme de bande, dont la surface comporte un système d'élévations (42) et de cavités (44) dans la configuration de la microstructure souhaitée,
b) les cavités (44) de la feuille de matière plastique en forme de bande (40) sont remplies d'une première laque (26) colorée ou incolore durcissable,
c) la surface de la feuille de matière plastique (40) en forme de bande est mise en contact avec une couche d'une deuxième laque durcissable (30),
d) la première laque (26) étant en contact avec la deuxième laque (30) est durcie dans les cavités de la feuille de matière plastique en forme de bande (40) avec la couche de la deuxième laque (30) et est reliée à cet effet à la couche de la deuxième laque (30), et
e) la surface de la feuille de matière plastique (40) est à nouveau enlevée de la deuxième laque durcie (30) de telle manière que la première laque (26) durcie, liée à la deuxième laque (30) est retirée des cavités (44) de la feuille de matière plastique en forme de bande (40).

2. Procédé selon la revendication 1, **caractérisé en ce que** la disposition des élévations et des cavités est incrustée dans la surface de la feuille de matière plastique en forme de bande.

3. Procédé selon la revendication 1 ou 2, **caractérisé en ce que** la feuille de matière plastique en forme de bande comprend une feuille de support sur laquelle sont appliquées une ou plusieurs couches de laque dans lesquelles est incrusté le système d'élévations et de cavités.

4. Procédé selon la revendication 3, **caractérisé en ce que** les couches de laque appliquées sur la feuille de support de la feuille de matière plastique en forme de bande sont formées par une laque de gaufrage déformée de façon thermoplastique ou une laque de gaufrage durcie par radiation et/ou **en ce que** la feuille de support de la feuille de matière plastique en forme de bande est prétraitée pour un bon ancrage des couches de laque appliquées.

5. Procédé selon au moins l'une quelconque des revendications 1 à 4, **caractérisé en ce que** la feuille de matière plastique en forme de bande est dotée d'un agent de séparation avant le remplissage avec la première laque dans l'étape b) pour assister le vidage complet des cavités et/ou **en ce que** l'épaisseur de la feuille de matière plastique en forme de bande se situe entre environ 23 µm et environ 50 µm.

6. Procédé selon au moins l'une quelconque des revendications 1 à 5, **caractérisé en ce que** les cavités de la feuille de matière plastique en forme de bande sont remplies dans l'étape b) avec une laque durcie par radiation, **en ce que** la surface de la feuille de matière plastique en forme de bande est mise en contact dans l'étape c) avec une couche de la deuxième laque durcie par radiation et **en ce que** la couche de la deuxième laque est durcie avec la première laque dans les cavités de la feuille de matière plastique en forme de bande dans l'étape d) par sollicitation avec une irradiation, notamment par irradiation aux UV, et/ou **en ce que** la première laque dans les cavités de la feuille de matière plastique en forme de bande est physiquement séchée et/ou prédurcie avant la mise en contact de l'étape c).

7. Procédé selon au moins l'une quelconque des revendications 1 à 6, **caractérisé en ce que** la couche de la deuxième laque est appliquée sur un support avant la mise en contact de l'étape c).

8. Procédé selon la revendication 7, **caractérisé en ce que** le support pour la couche de la deuxième laque est prétraitée pour un bon ancrage de la deuxième laque, notamment **en ce que** le support pour la couche de la deuxième laque est prétraitée par un prétraitement par pression.

9. Procédé selon au moins l'une quelconque des revendications 7 à 8, **caractérisé en ce que** le support pour la couche de la deuxième laque comprend une feuille de matière plastique transparente ou une couche de papier et/ou **en ce que** le support comporte une épaisseur se situant entre environ 5 µm et environ 23 µm, de préférence entre environ 5 µm et environ 12 µm et/ou **en ce que** la couche de la deuxième laque est appliquée sur le support avec une épaisseur de couche de moins de 5 µm environ, de préférence de moins de 3 µm environ.

10. Procédé selon au moins l'une quelconque des revendications 1 à 9, **caractérisé en ce que** la couche de la deuxième laque est physiquement séchée et/ou prédurcie avant la mise en contact de le l'étape c) et/ou **en ce qu'**un excédent éventuel en laque colorée ou incolore est enlevé dans l'étape b).

11. Procédé selon au moins l'une quelconque des revendications 1 à 10, **caractérisé en ce que** la microstructure de la feuille de matière plastique en forme de bande est formée par des éléments microstructurels avec une épaisseur d'enduction se situant entre environ 1 µm et environ 10 µm et/ou **en ce que** la microstructure de la feuille de matière plastique en forme de bande est formée par des éléments microstructurels avec une profondeur de structure se situant entre environ 1 µm et environ 20 µm, de préférence entre environ 1 µm et environ 10 µm.

12. Procédé selon au moins l'une quelconque des revendications 1 à 11, **caractérisé en ce qu'**une image de motif d'un système périodique planaire ou au moins localement périodique d'une pluralité de microéléments de motif est appliquée en tant que microstructure , notamment **en ce que** le côté opposée du support ou de la couche de la deuxième laque est doté d'un système périodique planaire ou au moins localement périodique d'une pluralité de microéléments de focalisation pour l'observation en agrandissement moiré des microéléments de motif de l'image de motif.

13. Procédé selon la revendication 12, **caractérisé en ce que** les microéléments de focalisation sont formés par des microlentilles non cylindriques, notamment par des microlentilles avec une surface de base circulaire ou polygonale limitée et/ou **en ce que** les microéléments de focalisation sont incrustés dans la couche de la deuxième laque pendant la mise en contact de l'étape c) .

14. Procédé selon au moins l'une quelconque des revendications 1 à 13, **caractérisé en ce que** la couche en deuxième laque durcie et/ou le support avec la microstructure appliquée de première laque durcie est dotée d'une ou de plusieurs couches fonctionnelles pour l'utilisation en tant qu'élément de sécurité pour des papiers de sécurité, des documents de valeur ou éléments analogues, notamment de couches avec des caractéristiques de sécurité pouvant être saisies visuellement et/ou par machine, et/ou **en ce que** la microstructure notamment colorée appliquée sur la couche de deuxième laque est dotée d'un surlaquage transparent.

15. Procédé pour la réalisation d'un objet, notamment d'un support de données ou d'un élément de sécurité, pour lequel une microstructure colorée ou incolore est appliquée sur une couche d'une deuxième laque durcissable avec un procédé selon l'une quelconque des revendications 1 à 14.

16. Procédé selon la revendication 15, **caractérisé en ce que** la microstructure est formée à partir d'une première laque colorée ou incolore durcie par radiation ou **en ce que** la microstructure est appliquée sur un support doté d'une couche de la deuxième laque, notamment un support doté d'une couche durcie par radiation de la deuxième laque.

17. Procédé selon l'une quelconque des revendications 15 à 16, **caractérisé en ce que** l'objet est un élément de sécurité, notamment un fil de sécurité, une étiquette ou un élément de transfert, de préférence **en ce que** l'élément de sécurité est thermosoudable ou **en ce que** l'objet est un support de données, notamment un billet de banque, un document de valeur, un passeport, une carte d'identité ou un document.
